# EUROPÄISCHE PATENTSCHRIFT

(11) **EP 2 274 092 B1**
(45) Veröffentlichungstag und Bekanntmachung des Hinweises auf die Patenterteilung: **05.09.2012**
(21) Anmeldenummer: 09737828.5
(22) Anmeldetag: 18.04.2009
(51) Int. Cl.: C08G 18/79, C08G 18/24, B01J 23/14, B01J 31/00, C08G 18/10, B01J 31/02

(54) **NEUE KATALYSATOREN UND DEREN EINSATZ BEI DER HERSTELLUNG VON POLYURETHANEN**
NEW CATALYSTS AND USE THEREOF IN THE PRODUCTION OF POLYURETHANES
NOUVEAUX CATALYSEURS ET LEUR UTILISATION DANS LA PRÉPARATION DE POLYURÉTHANES

(30) Priorität: 02.05.2008 DE 102008021980
(43) Veröffentlichungstag der Anmeldung: 19.01.2011
(73) Patentinhaber: Bayer MaterialScience AG, 51368 Leverkusen (DE)
(72) Erfinder: KRAUSE, Jens, F-26540 Mours Saint Eusebe (FR); REITER, Stephan, 51061 Köln (DE); LINDNER, Stefan, 50670 Köln (DE); SCHMIDT, Axel, 239191 Singapore (SG); JURKSCHAT, Klaus, 44379 Dortmund (DE); SCHÜRMANN, Markus, 45665 Recklinghausen (DE); BRADTMÖLLER, Gerrit, 46286 Dorsten (DE)
(86) Internationale Anmeldenummer: PCT/EP2009/002849
(87) Internationale Veröffentlichungsnummer: WO 2009/132784

(56) Entgegenhaltungen:
- EP-A- 0 890 576

## Beschreibung

Die Erfindung betrifft neue Katalysatoren und deren Herstellung sowie deren bevorzugte Verwendung bei der Produktion von Polyisocyanat-Polyadditionsprodukten.

Polyurethane sind seit langem bekannt und werden in vielen Bereichen eingesetzt. Häufig muss die eigentliche Polyurethanreaktion unter Verwendung von Katalysatoren durchgeführt werden, da ansonsten die Reaktion zu langsam abläuft und gegebenenfalls zu Polyurethanprodukten mit schlechten mechanischen Eigenschaften führt. In den meisten Fällen muss die Reaktion zwischen der Hydroxylkomponente und der NCO-Komponente katalysiert werden. Bei den gebräuchlichen Katalysatoren wird zwischen metallhaltigen und nicht-metallhaltigen Katalysatoren unterschieden. Typische gebräuchliche Katalysatoren sind beispielsweise Aminkatalysatoren, wie etwa 1,8-Diazabicyclo[5.4.0]undec-7-en (DBU), 1,4-Diazabicyclo[2.2.2]octan (DABCO) oder Triethanolamin. Bei metallhaltigen Katalysatoren handelt es sich meist um Lewissäureverbindungen, wie etwa Dibutylzinndilaurat, Bleioctoat, Zinnoctoat, Titan- und Zirkoniumkomplexe, aber auch Cadmium-, Bismut- (beispielsweise Bismutneodecanoat) und Eisenverbindungen. Eine Anforderung an den Katalysator ist, dass dieser möglichst definiert nur eine der vielfältigen Polyurethanreaktionen katalysiert, wie etwa nur die Reaktion zwischen OH- und NCO-Gruppen. Nebenreaktionen, wie z.B. Di- oder Trimerisierungen des Isocyanates, Allophanatisierungen, Biwetisierungen, Wasserreaktionen oder Harnstoffbildungen sollten hierbei nicht katalysiert werden. Die Anforderung geht immer dahin, dass ein optimaler Katalysator exakt die Reaktion katalysiert, die gerade gewünscht ist; beispielsweise nur die Wasserreaktion, so dass ein definiertes Schäumprofil entsteht oder, wie bei Verwendung der Kaliumacetate, bevorzugt die Polyisocyanuratreaktion. Bis jetzt gibt es jedoch kaum Katalysatoren, die nur eine definierte Reaktion katalysieren. Dies ist aber gerade bei den vielfältigen Reaktionsmöglichkeiten bei der Polyurethanherstellung äußerst wünschenswert. Besonders interessant sind nicht nur Katalysatoren, die definiert nur eine Reaktion katalysieren, sondern Katalysatoren, die zusätzlich gezielt aktiv werden und nur unter bestimmten Bedingungen Reaktionen katalysieren. In solchen Fällen spricht man von schaltbaren Katalysatoren. Diese schaltbaren Katalysatoren werden wiederum in thermisch, photochemisch oder optisch schaltbare unterteilt. Allgemein wird hierbei auch von latenten Katalysatoren gesprochen und im thermischen Fall von thermolatenten Katalysatoren. Diese Katalysatoren ruhen bis die Reaktionsmischung eine bestimmte Temperatur erreicht. Oberhalb dieser Temperatur sind sie dann aktiv, bevorzugt schlagartig aktiv. Diese latenten Katalysatoren ermöglichen lange Topfzeiten und schnelle Entformungszeiten.

Die bis heute bekannte und ggf. verwendete Klasse an latenten Katalysatoren besteht aus Quecksilberverbindungen. Der prominenteste Vertreter ist hierbei das Phenylquecksilbemeodecanoat (Thorcat 535 und Cocure 44). Dieser Katalysator offenbart ein latentes Reaktionsprofil, wobei der Katalysator anfangs nahezu inaktiv ist und erst nach langsamer Erwärmung der Mischung, meist aufgrund der Exothermie der unkatalysierten Umsetzung von NCO- mit OH-Gruppen, bei einer bestimmten Temperatur (meist um die 70°C) schlagartig aktiv wird. Bei Einsatz dieses Katalysators können sehr lange Offenzeiten bei sehr kurzen Aushärtezeiten erreicht werden. Dies ist besonders dann vorteilhaft, wenn sehr viel Material ausgetragen werden muss (z.B. eine große Form gefüllt werden muss) und nach erfolgter Austragung die Reaktion schnell und damit wirtschaftlich beendet werden soll.

Besonders vorteilhaft beim Einsatz von latenten Katalysatoren ist, wenn zudem folgende Bedingungen erfüllt sind:
a) Eine Erhöhung der Katalysatormenge beschleunigt die Reaktion, ohne dass der Katalysator die Latenz verliert.
b) Eine Erniedrigung der Katalysatormenge verlangsamt die Reaktion, ohne dass der Katalysator die Latenz verliert.
c) Eine Variation der Katalysatormenge, der Kennzahl, des Mischungsverhältnisses, der Ausstoßmenge und/oder des Hartsegmentanteils im Polyurethan beeinträchtigt nicht die Latenz des Katalysators.
d) Bei allen vorgenannten Variationen sorgt der Katalysator für eine nahezu vollständige Umsetzung der Reaktanden, ohne dass klebrige Stellen zurückbleiben.

Ein besonderer Vorteil der latenten Katalysatoren ist darin zu sehen, dass sie im fertigen Polyurethan-Werkstoff infolge ihrer mit sinkender Temperatur abnehmenden katalytischen Wirkung die Spaltung von Urethangruppen z.B. bei Raumtemperatur im Vergleich zu konventionellen Katalysatoren nur wenig beschleunigen. Sie tragen somit zu günstigen Dauergebrauchseigenschaften der Polyurethane bei.

Darüber hinaus ist beim Einsatz von Katalysatoren allgemein darauf zu achten, dass die physikalischen Eigenschaften der Produkte möglichst nicht negativ beeinflusst werden. Dies ist auch der Grund, warum eine gezielte Katalyse einer bestimmten Reaktion so wichtig ist. Gerade bei der Herstellung von Elastomeren, insbesondere von Gießelastomeren ist der Einsatz von Quecksilberkatalysatoren sehr stark verbreitet, da sie breit einsetzbar sind, nicht mit zusätzlichen Katalysatoren kombiniert werden müssen und sehr gezielt die Reaktion zwischen OH- und NCO-Gruppen katalysieren. Einziger - dafür aber sehr bedeutender Nachteil - ist die hohe Toxizität der Quecksilberverbindungen, so dass große Anstrengungen unternommen werden, Alternativen für die Quecksilberkatalysatoren zu finden. Darüber hinaus werden diese Verbindungen in einigen Industrien verboten (Automobil-, Elektroindustrie).

Ein Überblick über den Stand der Technik wird in WO 2005/058996 gegeben. Hier wird beschrieben, wie mit Titan- und Zirkoniumkatalysatoren gearbeitet wird. Es werden auch zahlreiche Kombinationsmöglichkciten von verschiedenen Katalysatoren erwähnt.

Systeme, die zumindest weniger toxisch als Quecksilberkatalysatoren sind, z.B. auf Basis von Zinn, Zink, Bismut, Titan oder Zirkonium, aber auch Amidin- und Aminkatalysatoren, sind im Markt zwar bekannt, weisen bis heute jedoch nicht die Robustheit und Einfachheit der Quecksilberverbindungen auf.

Bestimmte Kombinationen von Katalysatoren bewirken, dass die Gelreaktion weitestgehend von der Aushärtungsreaktion getrennt erfolgt, da viele dieser Katalysatoren nur selektiv agieren. Beispielsweise wird Bismut(III)neodecanoat mit Zinkneodecanoat und Neodecansäure kombiniert. Oft wird noch zusätzlich 1,8-Diazabicyclo[5.4.0]undec-7-en zugegeben. Obwohl diese Kombination zu den bekanntesten gehört, ist sie leider nicht so breit und universell einsetzbar wie z.B. Thorcat 535 (Fa. Thor Especialidades S.A.) und ist darüber hinaus anfällig bei Rezepturschwankungen. Die Verwendung dieser Katalysatoren ist in DE 10 2004 011 348 beschrieben. Weitere Kombinationen von Katalysatoren sind in WO 2005/058996, US 3714077, US 4584362, US 5011902, US 5902835 und US 6590057 offenbart.

Bei dem im Markt erhältlichen Produkt DABCO DC-2 der Fa. Air Products Chemicals Europe B.V. handelt es sich um eine Katalysatormischung aus 1,4-Diazabicyclo[2.2.2]octan (DABCO) und Dibutylzinndiacetat. Der Nachteil dieser Mischung ist, dass das Amin unmittelbar aktivierend wirkt. Alternative Systeme sind beispielsweise POLYCAT SA-1/10 (Fa. Air Products Chemicals Europe B.V.). Hierbei handelt es sich um mit Säure blockiertes DABCO. Obwohl dieses System thermolatent ist, werden derartige Systeme wegen ihrer schlechten katalytischen Wirkung bei der Aushärtung nicht verwendet; die in Gegenwart dieser Systeme hergestellten Elastomere bleiben am Ende der Reaktion klebrig; man spricht auch vom "Verhungern" der Reaktion.

Das Dokument EPO 890 576 A2 offenbart Polyisocyanat-Poyadditionsprodukte, die mittels mehrkerniger Sn(IV) Verbindungen als Katalysatoren erhältlich sind.

Aufgabe war es daher, daher, Systeme und Katalysatoren zur Verfügung zu stellen, mit denen es möglich ist, Polyisocyanat-Polyadditionsprodukte mit guten mechanischen Eigenschaften herzustellen, und die anfangs eine stark verzögerte und nach dieser Anfangsphase eine beschleunigte Reaktion zum Endprodukt liefern. Das System und der Katalysator sollten zudem frei von toxischen Schwermetallen, wie Cadmium, Quecksilber und Blei sein.

Diese Aufgabe konnte überraschenderweise durch den Einsatz spezieller Sn(IV)-Katalysatoren gelöst werden.

Ein weiterer Gegenstand der Erfindung ist ein Verfahren zur Herstellung der erfindungsgemäßen Polyisocyanat-Polyadditionsprodukte, wobei
Polyisocyanate (a) mit NCO-reaktiven Verbindungen (b) in Gegenwart von latenten Katalysatoren (c) und gegebenenfalls zusätzlichen von (c) verschiedenen Katalysatoren und/oder Aktivatoren unter Zusatz von gegebenenfalls Treibmitteln, gegebenenfalls Füllstoffen und/oder Fasermaterialien und gegebenenfalls Hilfs- und/oder Zusatzmitteln umgesetzt werden, dadurch gekennzeichnet, dass als latente Katalysatoren vierwertige einkernige Zinnverbindungen der Formel I mit mindestens einem über wenigstens ein Sauerstoff- oder Schwefelatom gebundenen wenigstens einen Stickstoff enthaltenden Liganden

Sn(IV)(L¹)ₙ₁(L²)ₙ₂(L³)ₙ₃(L⁴)ₙ₄ (I)

mit n1, n2, n3, n4 0 oder 1 und L¹, L², L³, L⁴ ein-, zwei-, drei- oder vierbindige Liganden
oder darauf basierende vierwertige mehrkernige Zinnverbindungen eingesetzt werden, wobei mindestens ein Ligand je Sn-Atom folgende Bedeutung hat:

-X-Y

mit X = O, S, OC(O), OC(S), O(O)S(O)O, O(O)S(O)
Y = -R1-N(R2)(R3) oder -R1-C(R4)=NR2
R1, R2, R3, R4 unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R2, R3, R4 unabhängig voneinander Wasserstoff, R1-X sind oder R2 und R3 oder R2 und R1 oder R3 und R1 oder R4 und R1 oder R4 und R2 einen Ring bilden
und wobei die übrigen Liganden unabhängig voneinander -X-Y mit der vorgenannten Bedeutung sind oder folgende Bedeutung haben:
gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxid, Amidreste, Sauerstoff, Schwefel, R2 oder XR2, besonders bevorzugt Sauerstoff, Schwefel, Alkoholate, Thiolate oder Carboxylate.

Ein weiterer Gegenstand der Erfindung sind zweikernige vierwertige Zinnverbindungen der Formel II mit mindestens einem über wenigstens ein Sauerstoff- oder Schwefelatom gebundenen wenigstens einen Stickstoff enthaltenden Liganden je Sn-Atom

[(L¹)ₙ₁(L²)ₙ₂(L³)Sn(IV)]₂O (II)

mit nl, n2 0 oder 1 und L¹, L², L³ ein-, zwei- oder dreibindige Liganden,
wobei mindestens ein Ligand je Sn-Atom folgende Bedeutung hat:

-X-Y

mit X = O, S, OC(O), OC(S), O(O)S(O)O, O(O)S(O)
Y = -R1-N(R2)(R3) oder -RI-C(R4)=NR2
R1, R2, R3, R4 unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R2, R3, R4 unabhängig voneinander Wasserstoff, R1-X sind oder R2 und R3 oder R2 und R1 oder R3 und R1 oder R4 und R1 oder R4 und R2 einen Ring bilden
und wobei die übrigen Liganden X-Y mit der vorgenannten Bedeutung sind oder folgende Bedeutung haben:
gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxid, Amidreste, Sauerstoff, Schwefel, R2 oder XR2, besonders bevorzugt Sauerstoff, Schwefel, Alkoholate, Thiolate oder Carboxylate.

Ein weiterer Gegenstand der Erfindung ist ein Verfahren zur Herstellung der erfindungsgemäßen zweikernigen vierwertigen Zinnverbindungen der Formel II mit mindestens einem über wenigstens ein Sauerstoff- oder Schwefelatom gebundenen wenigstens einen Stickstoff enthaltenden Liganden je Sn-Atom, dadurch gekennzeichnet, dass sie aus entsprechenden ein- oder mehrkernigen Sn(IV)-Verbindungen über einen Ligandenaustausch hergestellt werden.

Ein weiterer Gegenstand der Erfindung sind zwei- oder mehrkernige vierwertige Zinnverbindungen der Formel III mit mindestens einem über wenigstens ein Sauerstoff- oder Schwefelatom gebundenen wenigstens einen Stickstoff enthaltenden Liganden je Sn-Atom

[(L¹)ₙ₁(L²)ₙ₂Sn(IV)O]ₙ (III)

mit n1, n2 0 oder 1, n größer oder gleich 2 und L¹, L² ein- oder zweibindige Liganden,
wobei mindestens ein Ligand je Sn-Atom folgende Bedeutung hat:

-X-Y

mit X = O, S, OC(O), OC(S), O(O)S(O)O, O(O)S(O)
Y = -R1-N(R2)(R3) oder -R1-C(R4)=NR2
R1, R2, R3, R4 unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R2, R3, R4 unabhängig voneinander Wasserstoff, R1-X sind oder R2 und R3 oder R2 und R1 oder R3 und R1 oder R4 und R1 oder R4 und R2 einen Ring bilden
und wobei der übrige Ligand -X-Y mit der vorgenannten Bedeutung ist oder folgende Bedeutung hat:
gesättigter oder ungesättigter, cyclischer oder acyclischer, verzweigter oder unverzweigter, substituierter oder unsubstituierter, gegebenenfalls durch Heteroatome unterbrochener Kohlenwasserstoffrest, Halogenid, Hydroxid, Amidrest, Sauerstoff, Schwefel, R2 oder XR2, besonders bevorzugt Sauerstoff, Schwefel, Alkoholate, Thiolate oder Carboxylate.

Ein weiterer Gegenstand der Erfindung ist ein Verfahren zur Herstellung der erfindungsgemäßen zwei- oder mehrkernigen vierwertigen Zinnverbindungen der Formel III mit mindestens einem über wenigstens ein Sauerstoff- oder Schwefelatom gebundenen wenigstens einen Stickstoff enthaltenden Liganden je Sn-Atom, dadurch gekennzeichnet, dass sie aus entsprechenden ein- oder mehrkernige Zinn(II)-Verbindungen durch Oxidation mit gleichzeitiger Oligomerisierung oder aus entsprechenden ein- oder mehrkernige Sn(IV)-Verbindungen über einen Ligandenaustausch hergestellt werden. Bevorzugt wird mit Sauerstoff/Luft oder Peroxoverbindungen oxidiert.

Ein weiterer Gegenstand der Erfindung sind latente Katalysatoren bestehend aus vierwertigen einkernigen Zinnverbindungen der Formel I mit mindestens einem über wenigstens ein Sauerstoff-oder Schwefelatom gebundenen wenigstens einen Stickstoff enthaltenden Liganden oder aus zwei-oder mehrkernigen vierwertigen Zinnverbindungen der Formeln II, III oder IV mit mindestens einem über wenigstens ein Sauerstoff- oder Schwefelatom gebundenen wenigstens einen Stickstoff enthaltenden Liganden je Sn-Atom

Sn(IV)(L¹)ₙ (L²)ₙ₂(L³)ₙ₃(L⁴)ₙ₄ (I)

mit n1, n2, n3, n4 0 oder 1 und L¹, L², L³, L⁴ ein-, zwei-, drei- oder vierbindige Liganden

[(L¹)ₙ₁(L²)ₙ₂(L³)ₙ₃Sn(IV)]₂O (II)

mit n1, n2 0 oder 1 und L¹, L², L³ ein-, zwei- oder dreibindige Liganden

[(L¹)ₙ₁(L²)ₙ₂Sn(IV)O]ₙ (III)

[(L¹)ₙ₁ (L²)ₙ₂Sn(IV)S]ₙ (IV)

mit n1, n2 0 oder 1, n größer oder gleich 2 und L¹, L² ein- oder zweibindige Liganden,
wobei mindestens ein Ligand je Sn-Atom folgende Bedeutung hat:

-X-Y

mit X = O, S, OC(O), OC(S), O(O)S(O)O, O(O)S(O)
Y = -R1-N(R2)(R3) oder -R1-C(R4)=NR2
R1, R2, R3, R4 unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R2, R3, R4 unabhängig voneinander Wasserstoff, R1-X sind oder R2 und R3 oder R2 und R1 oder R3 und R1 oder R4 und R1 oder R4 und R2 einen Ring bilden
und wobei die übrigen Liganden unabhängig voneinander -X-Y mit der vorgenannten Bedeutung sind oder folgende Bedeutung haben:
gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxid, Amidreste, Sauerstoff, Schwefel, R2 oder XR2, besonders bevorzugt Sauerstoff, Schwefel, Alkoholate, Thiolate oder Carboxylate.

Verfahren zur Herstellung der Verbindungen der Formel I und der Formel IV findet man u.a. in: A. A. Selina, S. S. Karlov, E. Kh. Lermontova, G. S. Zaitseva, Chem. Heterocycl. Comp. 2007, 43, 813, R. C. Mehrotra, V. D. Gupta, Indian J. Chem. 1967, 5, 643, und darin angeführter Literatur.

Die latenten Katalysatoren bestehend aus den vorgenannten Zinn(IV)-Verbindungen werden vorzugsweise bei der Herstellung von Polyisocyanat-Polyadditionsverbindungen, insbesondere Polyurethanen eingesetzt.

Bei den vom speziellen Liganden unterschiedlichen Liganden handelt es sich um die aus der Zinnchemie bekannten Liganden. Diese Liganden können unabhängig voneinander teilweise oder ausschließlich über Kohlenstoff an das Zinn gebunden sein (organische Zinnverbindungen/Zinnorganyle). Die direkt an das Zinn gebundenen Kohlenwasserstoffreste sind bevorzugt gesättigte Alkylreste mit 1 bis 30 Kohlenstoffatomen, besonders bevorzugt mit 1 bis 8 Kohlenstoffatomen. Die Liganden können unabhängig voneinander auch ausschließlich über Nicht-Kohlenstoffatome an das Zinn gebunden sein (anorganische Zinnverbindungen). Die anorganischen Zinnverbindungen - also Zinnverbindungen ohne Zinn-Kohlenstofibindungen - sind auf Grund ihrer geringeren Toxizität bevorzugt.

Bevorzugt handelt es sich bei den vom speziellen Liganden unterschiedlichen Liganden um Sauerstoffbrücken, Hydroxid, Alkoholate, Carboxylate, Thiolate (jeweils bevorzugt mit 1 bis 30 Kohlenstoffatomen, besonders bevorzugt mit 1 bis 12 Kohlenstoffatomen) und Halogenide (bevorzugt Chlorid und Bromid), besonders bevorzugt erfolgt die Bindung der Liganden zum Zinn über Sauerstoff, z.B. als Sauerstoffbrücke, als Hydroxid oder in Form einer Alkoxygruppe (Alkoholat) oder als Carboxylat.

Bevorzugte Alkoholat-Liganden sind MeO-, EtO-, PrO-, iPrO-, BuO-, tBuO-, PhO- und:

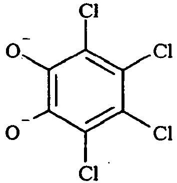

Me = Methyl-, Et = Ethyl-, Pr = Propyl-, iPr = Isopropyl-, Bu = n-Butyl-, tBu = tert.-Butyl-, Ph = Phenylrest

Bevorzugte Carboxylat-Liganden sind Formiat, Acetat, Propanoat, Butanoat, Pentanoat, Hexanoat, Ethylhexanoat, Laurat, Lactat und Benzoat, besonders bevorzugt Ethylhexanoat, Laurat und Benzoat.

Die Zinnverbindungen - wie allgemein bekannt ist - neigen zur Oligomerisierung, so dass häufig mehrkernig Zinnverbindungen oder Gemische aus ein- und mehrkernigen Zinnverbindungen vorliegen. In den mehrkernigen Zinnverbindungen sind die Zinnatome bevorzugt über Sauerstoffatome miteinander verbunden.

Typische oligomere Komplexe (mehrkernige Zinnverbindungen) entstehen z.B. durch Kondensation der Zinnatome über Sauerstoff oder Schwefel, z.B. [OSn(O-R1-N(R2)-R1-O)]ₙ mit n > 1. Bei niedrigen Oligomerisierungsgraden findet man häufig cyclische, bei höheren Oligomerisierungsgraden lineare Oligomere mit OH-Endgruppen.

Beim speziellen Liganden -X-Y bedeutet X vorzugsweise Sauerstoff, Schwefel oder -O-C(O) -.

Bei den speziellen Liganden -X-Y handelt es sich bevorzugt um einen Liganden, bei dem X Sauerstoff, Schwefel oder -C(O)O- ist.

Vorzugsweise handelt es sich bei dem Liganden -X-Y um einen Liganden, bei dem X Schwefel oder Sauerstoff und Y -CH₂CH₂N(R)CH₂CH₂S oder -CH₂CH₂N(R)CH₂CH₂O ist mit R bevorzugt Me, Et, Bu, tBu, Pr, iPr oder Ph.

Vorzugsweise handelt es sich bei dem Liganden X-Y um einen Liganden, bei dem X -O-C(O)-und Y -CH₂-N(R)CH₂C(O)O ist mit R bevorzugt Me, Et, Bu, tBu, Pr, iPr oder Ph.

Bevorzugt als spezieller Ligand ist auch:

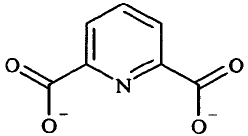

Bevorzugte spezielle Liganden X-Y sind:
Me₂NCH₂CH₂O-, Et₂NCH₂CH₂O-, Me₂NCH₂CH₂Me)O-, Bu₂NCH₂CH₂O-, Me₂NCH₂CH₂CH₂O-, PhN(H)CH₂CH₂O-, PhN(Et)CH₂CH₂O-, HN[CH₂CH₂O-]₂, -OCH₂CH₂N(H)CH₂CH₂CH₂O-, HN[CH₂CH(Me)O-]₂, MeN[CH₂CH₂O-]₂, BuN[CH₂CH₂O-]₂, PhN[CH₂CH₂O-]₂, MeN[CH₂CH(Me)O-]₂, BuN[CH₂CH(Me)O-]₂, PhN[CH₂CH(Me)O-]₂, N[CH₂CH₂O-]₃, N[CH₂CH(Me)O-]₃,

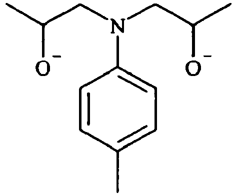

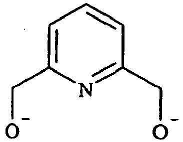

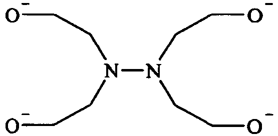

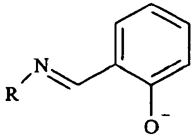

In einer bevorzugten Variante besteht die Zinnverbindung aus 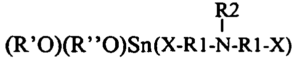 mit X = O, S, OC(O), bevorzugt O und OC(O), besonders bevorzugt O, wobei die Reste R' und R" gleich oder verschieden sein können. Die zwei Reste R1 können unterschiedlich oder gleich sein und haben die oben genannte Bedeutung. Der Rest R2 hat die oben genannte Bedeutung. In einer besonders bevorzugten Ausführungsform sind die Reste R' und R" identisch, wie auch die beiden Reste R1. Bei den Resten R' und R" sowie R2 handelt es sich vorzugsweise um Alkylreste. Die Reste R1 sind bevorzugt -(CH₂)ₙ-, wobei n bevorzugt 2 ist. R2 und R' sowie R" sind vorzugsweise Methyl, Butyl, Propyl oder Isopropyl. Anstelle der Reste R'O und R"O können auch Sauerstoffatome stehen, wobei dann eine zweikernige über zwei Sauerstoffbrücken verbundene Zinnverbindung erhalten wird. Dies ist ein Spezialfall der beschriebenen oligomeren Zinn(IV)-Verbindungen [OSn(O-R1-N(R2)-R1-O)]ₙ mit n > 1.

In den Fällen, in denen die Zinnverbindungen Liganden mit freien OH-Resten aufweisen, kann der Katalysator bei der Polyisocyanat-Polyadditionsreaktion in das Produkt eingebaut werden. Auch über freie NH- oder NH₂-Gruppen der Liganden kann ein Einbau erfolgen. Besonderer Vorteil dieser einbaubaren Katalysatoren ist ihr stark reduziertes Fogging-Verhalten, was besonders beim Einsatz von Polyurethanen im Automobilinnenraum wichtig ist.

Die folgenden Formeln Ia bis Ij veranschaulichen einige Ausführungsbeispiele der eingesetzten latenten Katalysatoren.

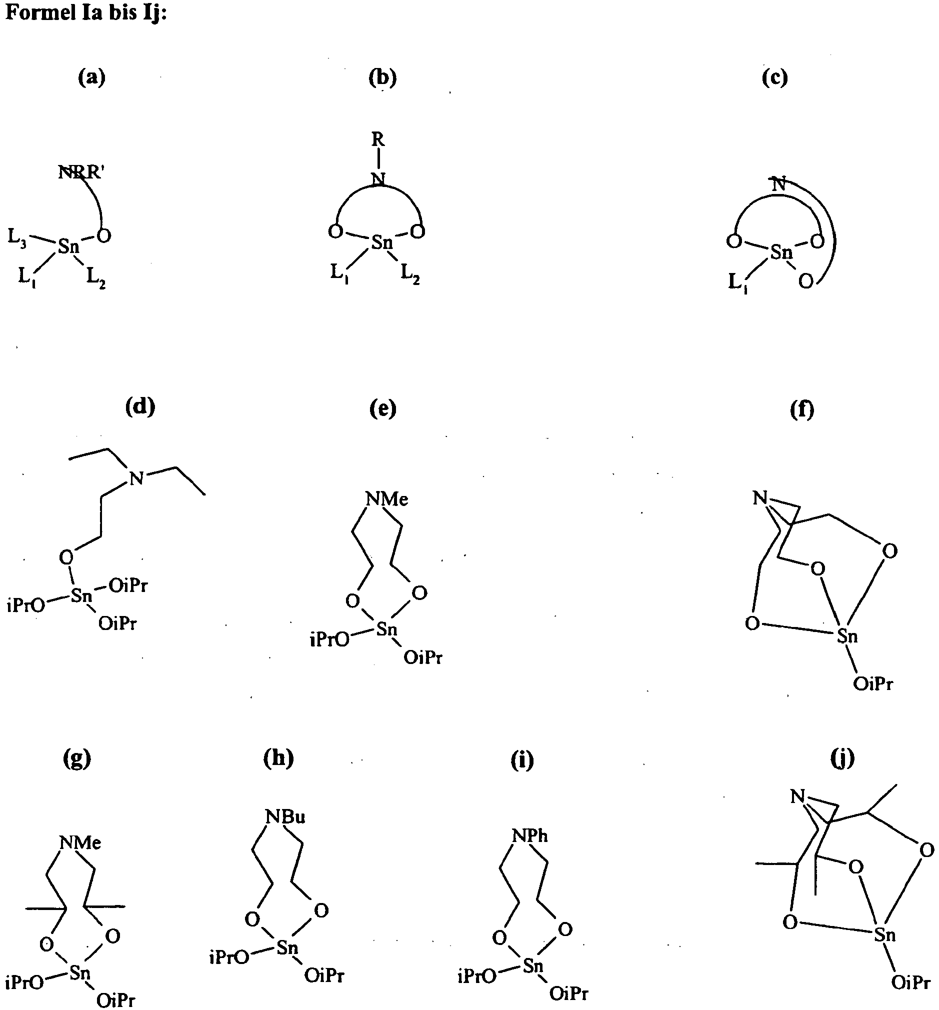

Die Formeln Ik bis In zeigen oligomerisierte (z.B. dimerisierte) Verbindungen. Ein Vorteil dieser oligomeren Stoffe ist ihr stark reduzierter Dampfdruck. Dies führt zu geringen Foggingwerten bei den mit diesen Verbindungen z.B. hergestellten Polyurethanen. Geringe Foggingwerte sind insbesondere beim Einsatz der Polyurethane in der Automobilindustrie sehr wichtig.

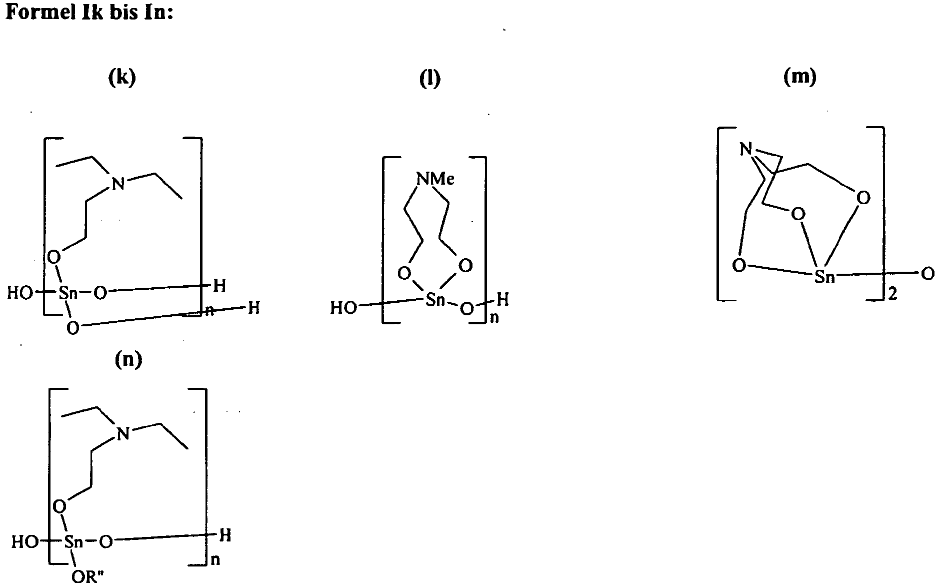

In gelöster Form können die Liganden am Zinn untereinander oder mit dem Lösungsmittel (koordinierendes Lösungsmittel) austauschen und weitere, alternative verbrückte oder kondensierte Strukturen mit höherem oder abweichendem Zinnkernanteil bilden, wie es aus der Zinnchemie bekannt ist. Es handelt sich hierbei um ein dynamisches Gleichgewicht.

Die latenten Katalysatoren können mit weiteren aus dem Stand der Technik bekannten Katalysatoren/Aktivatoren kombiniert werden; zum Beispiel Titan-, Zirkonium-, Bismut-, Zinn(II)-und/oder eisenhaltigen Katalysatoren, wie sie beispielsweise in WO 2005/058996 beschrieben sind.

Möglich ist auch eine Zugabe von Aminen oder Amidinen. Darüberhinaus können bei der Polyisocyanat-Polyadditionsreaktion auch saure Verbindungen, wie z.B. 2-Ethylhexansäure oder Alkohole zur Reaktionssteuerung zugegeben werden.

In einer bevorzugten Variante wird der latente Katalysator über die NCO-reaktive Verbindung oder in einem Lösungsmittel der Reaktionsmischung zugegeben. Denkbar ist auch eine Zudosierung über die Isocyanatkomponente.

### Beispiele für die Herstellung:

Die verschiedenen Herstellungsmethoden für die Zinn(IV)-Verbindungen sind u.a. beschrieben in: A. A. Selina, S. S. Karlov, E. Kh. Lermontova, G. S. Zaitseva, Chem. Heterocycl. Comp. 2007, 43, 813, R. C. Mehrotra, V. D. Gupta, Indian J. Chem. 1967, 5, 643, und darin angeführter Literatur.

Die Zinn (IV)-Verbindungen sind erhältlich durch Oxidation der entsprechenden Sn(II)-Verbindungen.

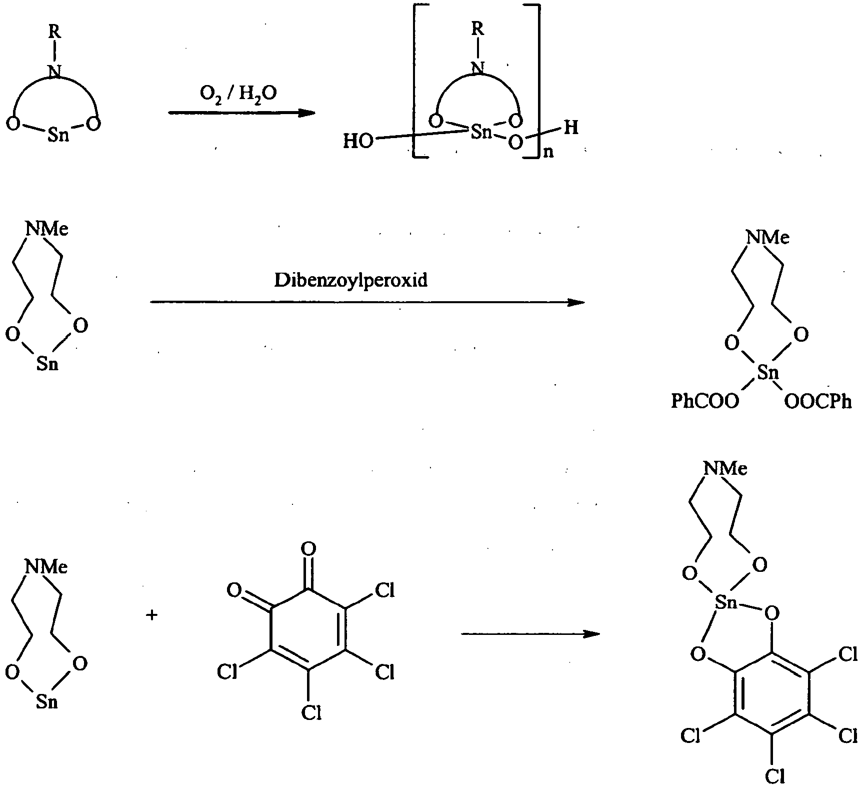

Die Zinn(II)-Verbindungen können auch mit Halogenen, bevorzugt Chlor und Brom zu den entsprechenden Dihalogen-Zinn(IV)-Verbindungen oxidiert werden.

Des Weiteren sind die Zinn(IV)-Verbindungen über einen Ligandenaustausch erhältlich. Sn(OR)₄ mit R = Alkyl oder Sn(Hal)₄ mit Hal = Cl, Br oder I werden beispielsweise mit H-X-Y oder M-X-Y (wobei X und Y die oben genannte Bedeutung haben und M Natrium, Lithium oder Kalium bedeutet) umgesetzt.

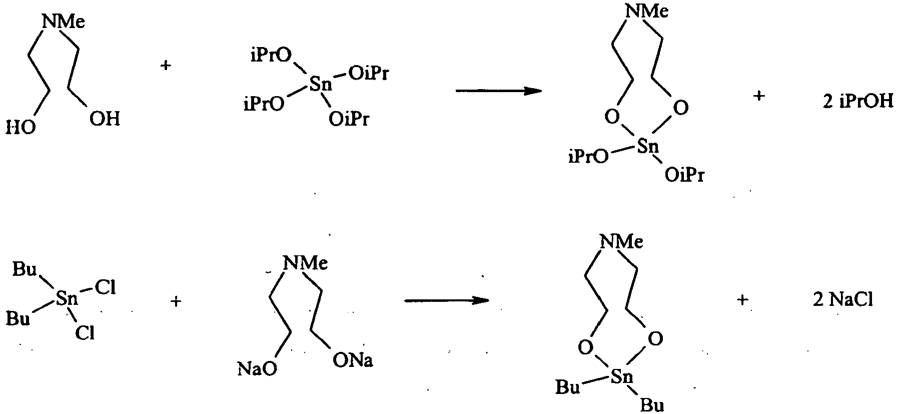

Die für die Herstellung von Polyisocyanat-Polyadditionsverbindungen, insbesondere Polyurethanen geeigneten Polyisocyanate (a) sind die dem Fachmann an sich bekannten organischen aliphatischen, cycloaliphatischen, aromatischen oder heterocyclischen Polyisocyanate mit mindestens zwei Isocyanatgruppen pro Molekül sowie Gemische davon. Beispiele für geeignete aliphatische bzw. cycloaliphatische Polyisocyanate sind Di- oder Triisocyanate, wie z.B. Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) und cyclische Systeme, wie z.B. 4,4'-Methylen-bis(cyclohexylisocyanat), 3,5,5-Trimethyl-1-isocyanato-3-isocyanatomethylcyclohexan (Isophorondiisocyanat, IPDI), sowie ω.ω'-Diisocyanato-1,3-dimethylcyclohexan (H₆XDI). Als aromatische Polyisocyanate können z.B. 1,5-Naphthalindiisocyanat, Diisocyanatodiphenylmethan (2,2'-, 2,4'-und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)-benzol (XDI) eingesetzt werden. Des Weiteren können TODI (3,3'-Dimethyl-4,4'-biphenyldiisocyanat), PPDI (1,4-Paraphenylendiisocyanat) und CHDI (Cyclohexyldiisocyanat) verwendet werden.

Überdies können aber auch die an sich bekannten Folgeprodukte der vorgenannten organischen aliphatischen, cycloaliphatischen, aromatischen oder heterocyclischen Polyisocyanate mit Carbodiimid, Uretonimin-, Uretdion-, Allophanat-, Biuret- und/oder Isocyanurat-Struktur, sowie Prepolymere, die durch Umsetzung des Polyisocyanats mit Verbindungen mit gegenüber Isocyanatgruppen reaktiven Gruppen erhalten werden, eingesetzt werden.

Die Polyisocyanatkomponente (a) kann in einem geeigneten Lösemittel vorliegen. Geeignete Lösemittel sind solche, die eine ausreichende Löslichkeit der Polyisocyanatkomponente aufweisen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA).

Die Isocyanatkomponente kann darüber hinaus übliche Hilfs- und Zusatzmittel, wie z.B. Rheologieverbesserer (zum Beispiel Ethylencarbonat, Propylencarbonat, dibasische Ester, Zitronensäureester), Stabilisatoren (zum Beispiel Broenstedt- und Lewis-Säuren, wie etwa Salzsäure, Phosphorsäure, Benzoylchlorid, Organomineralsäuren wie Dibutylphosphat, weiterhin Adipinsäure, Äpfelsäure, Bernsteinsäure, Traubensäure oder Zitronensäure), UV-Schutzmittel (zum Beispiel 2,6-Dibutyl-4-methylphenol), Hydrolyseschutzmittel (zum Beispiel sterisch gehinderte Carbodiimide), Emulgatoren sowie Katalysatoren (zum Beispiel Trialkylamine, Diazabicyclooctan, Zinndioctoat, Dibutylzinndilaurat, N-Alkylmorpholin, Blei-, Zink-, Zinn-, Calcium-, Magnesiumoctoat, die entsprechenden Naphthenate und p-Nitrophenolat und/oder auch Quecksilberphenylneodecanoat) und Füllstoffe (zum Beispiel Kreide), gegebenenfalls in das/den später zu bildende/n Polyurethan/Polyhamstoff einbaufähige Farbstoffe (die also über Zerewitinoff-aktive Wasserstoffatome verfügen) und/oder Farbpigmente enthalten.

Als NCO-reaktive Verbindungen (b) können alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole.

Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Polyesterpolyole können in bekannter Weise durch Polykondensation von niedermolekularen Polycarbonsäurederivaten, wie beispielsweise Bernsteinsäure, Adipinsäure, Korksäure, Azelainsäwe, Sebacinsäure, Dodecandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäwe-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobomylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Die Komponente (b) kann in einem geeigneten Lösemittel vorliegen. Geeignete Lösemittel sind solche, die eine ausreichende Löslichkeit der Komponente aufweisen. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA). Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), aber auch niedermolekulare Diamine, wie zum Beispiel Polyasparaginsäureester, sein.

Die als Komponente (b) einsetzbaren Polyetheramine sind insbesondere Diamine oder Triamine. Derartige Verbindungen werden beispielsweise von der Firma Huntsman unter der Bezeichnung Jeffamine® bzw. von der Firma BASF als Polyetheramine vertrieben.

Als Vernetzerkomponente bzw. Kettenverlängerer kommen meist kurzkettige Polyole bzw. Polyamine zum Einsatz. Typische Kettenverlängerer sind Diethyltoluoldiamin (DETDA), 4,4'-Methylenbis-(2,6-diethyl)-anilin (MDEA), 4,4'-Methylenbis-(2,6-diisopropyl)-anilin (MDIPA), 4,4'-Methylen-bis-(3-chloro-2,6-diethyl)-anilin (MCDEA), Dimethylthiotoluoldiamin (DMTDA, Ethacure® 300), N,N'-Di(sec-butyl)-amino-biphenylmethan (DBMDA, Unilink^{®} 4200) oder N,N'-Di-sec-butyl-p-phenylendiamin (Unilink® 4100), 3,3'-Dichloro-4,4'-diamino-diphenylmethan (MBOCA), Trimethylenglykol-di-p-aminobenzoat (Polacure 740M). Aliphatische aminische Kettenverlängerer können ebenfalls eingesetzt oder mitverwendet werden. 1,3-Propandiol, 1,4-Butandiol, 2,3-Butandiol, 1,5-Pentandiol, 1,6-Hexandiol und HQEE (Hydrochinon-di(β-hydroxyethyl)ether) sind ebenfalls einsetzbar.

Das Verfahren zur Herstellung der Polyisocyanat-Polyadditionsprodukte kann in Gegenwart üblicher Rheologieverbesserer, Stabilisatoren, UV-Schutzmittel, Katalyatoren, Hydrolyseschutzmittel, Emulgatoren, Füllstoffe, gegebenenfalls einbaufähiger Farbstoffe (die also über Zerewitinoff-aktive Wasserstoffatome verfügen) und/oder Farbpigmente durchgeführt werden. Bevorzugt ist auch eine Zugabe von Zeolithen.

Bevorzugte Hilfs- und Zusatzmittel sind Treibmittel, Füllstoffe, Kreide, Ruß oder Zeolithe, Flammschutzmittel, Farbpasten, Wasser, Mikrobenschutzmittel, Fließverbesserer, Thixotropiermittel, Oberflächenmodifizierungsmittel und Verzögerer bei der Herstellung der Polyisocyanat-Polyadditionsprodukte. Weitere Hilfs- und Zusatzstoffe umfassen Entschäumer, Emulgatoren, Schaumstabilisatoren und Zellregler. Eine Übersicht ist in G. Oertel, Polyurethane Handbook, 2nd Edition, Carl Hanser Verlag, München, 1994, Kap. 3.4., enthalten.

Typische Schäummittel sind Fluorkohlenwasserstoffe, Pentan, Cylclopentan, Wasser und/oder Kohlenstoffdioxid.

Die latenten Katalysatoren können zur Herstellung von Weich- und Hartschäumen, Beschichtungen, Kleb- und Dichtstoffen, halbharten Schäumen, Integralschäumen, Sprüh- und Gießelastomeren, Harzen und Bindemitteln in der Polyurethan-Chemie sowie von thermoplastischen Polyurethanen eingesetzt werden.

Darüber hinaus können die erfindungsgemäßen Katalysatoren zur Herstellung von Silikonen und Polyestern eingesetzt werden.

Die Erfindung soll anhand der nachfolgenden Beispiele näher erläutert werden.

### Beispiele:

### Beispiel 1 (Herstellung eines latenten Katalysators 1):

Aus einer Lösung von Sn(OCH₂CH₂)₂NMe (Herstellung siehe A. Zschunke, C. Mügge, M. Scheer, K. Jurkschat, A. Tzschach, J. Crystallogr. Spectrosc. Res. 1983, 13, 201) in Toluol (0,18 mol/l) wurde bei 25°C an der Atmosphäre über 48 h das Lösungsmittel abgedampft. Zunächst fiel ein farbloser Feststoff aus. Beim weiteren Abdampfen wurde ein gelbes Öl erhalten. Es wurden 100 ml Toluol zugesetzt und danach wieder abgedampft. Es wurden weitere 100 ml Toluol zugesetzt und erneut vollständig abgedampft. Das so erhaltene Öl wurde in Dichlormethan gelöst. Nach Zugabe von Toluol fiel ein farbloser Feststoff mit einem Schmelzpunkt > 250 °C aus.

¹¹⁹Sn-NMR (CH₂Cl₂/D₂O-Kapillare, 23 °C, Me₄Sn-Standard): δ -450 ppm

Elementaranalyse [Gew.-%] gef.: C 22,6; H 4,7; N 5,2; Sn 45

Bei der Verbindung 1 handelt es sich um HO[Sn(OCH₂CH₂)₂NMeO]ₙH (mit n = 1 bis 2).

### Beispiel 2 (Herstellung eines latenten Katalysators 2):

Eine Lösung von 2,35 g Sn(OCH₂CH₂)₂NMe in 100 ml Dichlormethan wurde bei Raumtemperatur mit 2,42 g Dibenzoylperoxid (gelöst in 50 ml CH₂Cl₂) umgesetzt. Es wurde drei Stunden gerührt und anschließend das Lösungsmittel im Vakuum entfernt. Die Umkristallisation aus CHCl₃ lieferte 4,16 g der Verbindung 2.

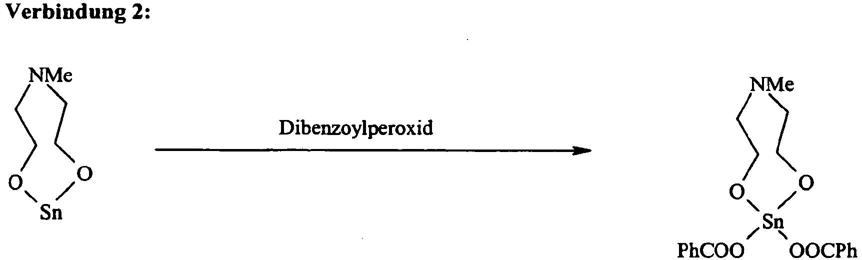

¹¹⁹Sn-NMR (CDCl₃, 28 °C, Me₄Sn-Standard): δ -656 ppm

Elementaranalyse [Gew.-%] (ber.) gef.: C (47,73) 46,1; H (4,43) 4,5; N (2,93) 2,8

Definition von Gießzeit (Topfzeit) und Entformungszeit bei der Herstellung von Polyurethan (PUR):

Die Gießzeit ist diejenige Zeit, nach der die PUR-Reaktionsmischung beim Gießen auf eine ebene Stahlplatte das Fließverhalten aufgrund merklichen Viskositätsanstieges signifikant ändert.

Die Entformungszeit ist diejenige Zeit, nach der der PUR-Probenkörper ohne Deformierung manuell aus dem Stahlzylinder gedrückt werden kann.

### Beispiel 3 (PUR-Herstellung mit dem Katalysator 1):

400 g Desmodur® MS 192 (MDI-Prepolymer der Fa. Bayer MaterialScience AG, 19,2% NCO-Gehalt) wurden mit 340 g Baytec^{®} VP.PU 20GE12 (Polyol der Fa. Bayer MaterialScience AG, OH-Zahl: 64 mg KOH/g), 60 g 1,4-Butandiol und 0,38 g (0,047 Gew.-%) des Katalysators 1 bei 50°C in einer 1,5 1 Weißblechdose (Durchmesser: 120 mm, Höhe: 135 mm) gemischt. Die Mischung wurde in einen auf 60°C temperierten und mit Trennmittel (Indrosil 2000) versehenen hohlen Stahlzylinder (Durchmesser: 40 mm, Höhe: 80 mm) gegossen. Der Probenkörper wurde entnommen.

### Beispiel 4 (PUR-Herstellung mit dem Katalysator 2):

400 g Desmodur^{®} MS 192 (MDI-Prepolymer der Fa. Bayer MaterialScience AG, 19,2% NCO-Gehalt) wurden mit 340 g Baytec^{®} VP.PU 20GE12 (Polyol der Fa. Bayer MaterialScience AG, OH-Zahl: 64 mg KOH/g), 60 g 1,4-Butandiol und 0,32 g (0,04 Gew.-%) des Katalysators 2 bei 50°C in einer 1,51 Weißblechdose (Durchmesser: 120 mm, Höhe: 135 mm) gemischt. Die Mischung wurde in einen auf 60°C temperierten und mit Trennmittel (Indrosil 2000) versehenen hohlen Stahlzylinder (Durchmesser: 40 mm, Höhe: 80 mm) gegossen. Der Probenkörper wurde entnommen.

### Vergleichsbeispiel 5 (mit Thorcat 535 (80% Phenyl-Hg-neodecanoat, 20% Neodecansäure; Fa. Thor Especialidades S.A.) als Katalysator):

400 g Desmodur^{®} MS 192 (MDI-Prepolymer der Fa. Bayer MaterialScience AG, 19,2%-NCO) wurden mit 340 g Baytec^{®} VP.PU 20GE12 (Polyol der Fa. Bayer MaterialScience AG, OH-Zahl: 64 mg KOH/g), 60 g 1,4-Butandiol und 0,56 g (0,07 Gew.-%) Thorcat 535 bei 50°C in einer 1,51 Weißblechdose (Durchmesser: 120 mm, Höhe: 135 mm) gemischt. Die Mischung wurde in einen auf 60°C temperierten und mit Trennmittel (Indrosil 2000) versehenen hohlen Stahlzylinder (Durchmesser: 40 mm, Höhe: 80 mm) gegossen.

### Vergleichsbeispiel 6 (mit 1,4-Diazabicyclo[2.2.2]octan (DABCO) als Katalysator):

400 g Desmodur MS 192 (MDI-Prepolymer der Fa. Bayer MaterialScience AG, 19,2%-NCO) wurden mit 340 g Baytec^{®} VP.PU 20GE12 (Polyol der Fa. Bayer MaterialScience AG, OH-Zahl: 64 mg KOH/g), 60 g 1,4-Butandiol und 0,20 g (0,025 Gew.-%) DABCO bei 50°C in einer 1,51 Weißblechdose (Durchmesser: 120 mm, Höhe: 135 mm) gemischt. Die Mischung wurde in einen auf 60°C temperierten und mit Trennmittel (Indrosil 2000) versehenen hohlen Stahlzylinder (Durchmesser: 40 mm, Höhe: 80 mm) gegossen.

### Vergleichsbeispiel 7 (mit Sn(OCH₂CH₂)₂NMe als Katalysator):

400 g Desmodur MS 192 (MDI-Prepolymer der Fa. Bayer MaterialScience AG, 19,2 % NCO-Gehalt) wurden mit 340 g Baytec^{®} VP.PU 20GE12 (Polyol der Fa. Bayer MaterialScience AG, OH-Zahl: 64 mg KOH/g), 60 g 1,4-Butandiol und 0,016 g (0,002 Gew.-%) Sn(OCH₂CH₂)₂NMe bei 50°C in einer 1,51 Weißblechdose (Durchmesser: 120 mm, Höhe: 135 mm) gemischt. Die Mischung wurde in einen auf 60°C temperierten und mit Trennmittel (Indrosil 2000) versehenen hohlen Stahlzylinder (Durchmesser: 40 mm, Höhe: 80 mm) gegossen.

### Vergleichsbeispiel 8 (mit DBTL (Dibutylzinndilaurat) als Katalysator):

400 g Desmodur MS 192 (MDI-Prepolymer der Fa. Bayer MaterialScience AG, 19,2 %-NCO) wurden mit 340 g Baytec^{®} VP.PU 20GE12 (Polyol der Fa. Bayer MaterialScience AG, OH-Zahl: 64 mg KOH/g), 60 g 1,4-Butandiol und 0,02 g (0,0025 Gew.-%) DBTL bei 50°C in einer 1,5 l Weißblechdose (Durchmesser: 120 mm, Höhe: 135 mm) gemischt. Die Mischung wurde in einem auf 60°C temperierten und mit Trennmittel (Indrosil 2000) versehenen hohlen Stahlzylinder (Durchmesser: 40 mm, Höhe: 80 mm) gegossen.

### Vergleichsbeispiel 9 (mit DBTL und N-Methyldiethanolamin (1:1) als Katalysator):

400 g Desmodur MS 192 (MDI-Prepolymer der Fa. Bayer MaterialScience AG, 19,2 %-NCO) wurden mit 340 g Baytec® VP.PU 20GE12 (Polyol der Fa. Bayer MaterialScience AG, OH-Zahl: 64 mg KOH/g), 60 g 1,4-Butandiol und 0,032 g (0,004 Gew.-%) DBTL und N-Methyldiethanolamin (1:1) bei 50°C in einer 1,5 l Weißblechdose (Durchmesser: 120 mm, Höhe: 135 mm) gemischt. Die Mischung wurde in einen auf 60°C temperierten und mit Trennmittel (Indrosil 2000) versehenen hohlen Stahlzylinder (Durchmesser: 40 mm, Höhe: 80 mm) gegossen.

### Vergleichsbeispiel 10 (mit DABCO DC-2 (Fa. Air Products Chemicals Europe B.V.) als Katalysator):

400 g Desmodur MS 192 (MDI-Prepolymer der Fa. Bayer Materialscience AG, 19,2 %-NCO) wurden mit 340 g Baytec^{®} VP.PU 20GE12 (Polyol der Fa. Bayer MaterialScience AG, OH-Zahl: 64 mg KOH/g), 60 g 1,4-Butandiol und 0,016 g (0,002 Gew.-%) DABCO DC-2 bei 50°C in einer 1,5 l Weißblechdose (Durchmesser: 120 mm, Höhe: 135 mm) gemischt. Die Mischung wurde in einen auf 60°C temperierten und mit Trennmittel (Indrosil 2000) versehenen hohlen Stahlzylinder (Durchmesser: 40 mm, Höhe: 80 mm) gegossen.

**Tabelle 1:**

| | **Katalysator [Gew.-%]** | **Gießzeit [s]** | **Entformung [min]** | **Härte Shore A** |
|---|---|---|---|---|
| Beispiel 3 | 0,047 | 190 | 11 | 91 |
| Beispiel 4 | 0,04 | 200 | 9 | 91 |
| Vergleich 5 | 0,07 | 190 | 24 | 92 |
| Vergleich 6 | 0,004 | 200 | 23 | 92 |
| Vergleich 7 | 0,002 | 180 | 18 | 92 |
| Vergleich 8 | 0,0025 | 190 | 22 | 92 |
| Vergleich 9 | 0,004 | 185 | 21 | 93 |
| Vergleich 10 | 0,002 | 190 | 23 | 93 |

Die Härte wurde nach 72 h bei Raumtemperatur gemäß DIN 53505 gemessen.

Aus den Daten ist zu entnehmen, dass in den erfindungsgemäßen Beispielen bei sehr langen Gießzeiten die kürzesten Entformungszeiten erhalten werden.

In Vergleich 5 wurde ein gebräuchlicher und üblicher Quecksilberkatalysator, in Vergleich 6 ein typischer Katalysator auf Basis eines tertiären Amins, in Vergleich 7 ein Zinn(II)-Katalysator, in Vergleich 8 ein typischer Zinn(IV)-Katalysator, in Vergleich 9 eine Kombination aus dem Katalysator aus Vergleich 8 mit einem Amin und in Vergleich 10 ein Zinn(IV)-Katalysator mit DABCO-Liganden eingesetzt.

### Vergleichsbeispiel 11 (ohne Katalvsator):

38,1 g Desmodur^{®} N3390BA (HDI-Polyisocyanat der Fa. Bayer MaterialScience AG, 19,6 % NCO-Gehalt) wurden mit 100 g Desmophen^{®} A870BA (Polyol der Fa. Bayer MaterialScience AG, 2,95 % OH-Gehalt) gemischt. Direkt nach der Mischung, nach 60 min, nach 120 min und nach 240 min wurde die Viskosität als Auslaufzeit (DIN 53 211, 4-mm-DIN-Auslaufbecher bei 23°C) bestimmt. Es wurden die Trocknungszeiten T1, T2, T3 und T4 gemäß DIN 53 150 bei einer Lagerung bei Raumtemperatur und einer Lagerung bei 60°C sowie die Pendelhärten [Pendeldämpfung nach König (DIN EN ISO 1522)] nach 7d bestimmt.

### Vereleichsbeisviel 12 (mit Dibutylzinndilaurat als Katalysator):

38,1 g Desmodur^{®} N3390BA (HDI-Polyisocyanat der Fa. Bayer MaterialScience AG, 19,6 % NCO-Gehalt) wurden mit 100 g Desmophen^{®} A870BA (Polyol der Fa. Bayer MaterialScience AG, 2,95 % OH-Gehalt) und 3,2 g Dibutylzinndilaurat (1 Gew.-% in Butylacetat) gemischt. Direkt nach der Mischung, nach 60 min, nach 120 min und nach 240 min wurde die Viskosität als Auslaufzeit (DIN 53 211, 4-mm-DIN-Auslaufbecher bei 23°C) bestimmt. Es wurden die Trocknungszeiten T1, T2, T3 und T4 gemäß DIN 53 150 bei einer Lagerung bei Raumtemperatur und einer Lagerung bei 60°C sowie die Pendelhärten [Pendeldämpfung nach König (DIN EN ISO 1522)] nach 7d bestimmt.

### Beispiel 13 (mit Katalysator 1):

38,1 g Desmodur^{®} N3390BA (HDI-Polyisocyanat der Fa. Bayer MaterialScience AG, 19,6 % NCO-gehalt) wurden mit 100 g Desmophen^{®} A870BA (Polyol der Fa. Bayer MaterialScience AG, 2,95 %-OH) und 2,9 g Katalysator 1 (10 Gew.-% in Dichlormethan) gemischt. Direkt nach der Mischung, nach 60 min, nach 120 min und nach 240 min wurde die Viskosität als Auslaufzeit (DIN 53 211, 4-mm-DIN-Auslaufbecher bei 23°C) bestimmt. Es wurden die Trocknungszeiten T1, T2, T3 und T4 gemäß DIN 53 150 bei einer Lagerung bei Raumtemperatur und einer Lagerung bei 60°C sowie die Pendelhärten [Pendeldämpfung nach König (DIN EN ISO 1522)] nach 7d bestimmt.

**Tabelle 2:**

| | **Vergleich 11** | **Vergleich 12** | **Beispiel 13** |
|---|---|---|---|
| **Auslaufzeiten bei RT [s]** | | | |
| 0h | 19 | 19 | 18 |
| 1h | 20 | 26 | 20 |
| 2h | 21 | 38 | 23 |
| 4h | 22 | 57 | 25 |

| **Trocknungszeiten bei RT [h]** | | | |
|---|---|---|---|
| T1 | 2 | 2 | 2 |
| T2 | 7 | 5 | 7 |
| T3 | 7 | 7 | 7 |
| T4 | 7 | 7 | 7 |

| **Trocknungszeiten bei 60°C [h]** | | | |
|---|---|---|---|
| T1 | 0 | 0 | 0 |
| T2 | 4 | 0 | 1 |
| T3 | 5 | 0 | 3 |
| T4 | 6 | 1 | 4 |

| **Pendelhärten (Lagerung bei 60°C) [s]** | | | |
|---|---|---|---|
| 7d | 198 | 177 | 186 |

Aus den Auslaufzeiten ist zu entnehmen, dass in Beispiel 13 der Katalysator 1 bei Raumtemperatur im Vergleich zu DBTL nur eine extrem geringe katalytische Aktivität entfaltet. Aus den Trocknungszeiten ist zu entnehmen, dass der Katalysator 1 im Vergleich zu DBTL bei Raumtemperatur keine merkliche katalytische Aktivität, bei 60°C hingegen eine signifikante katalytische Aktivität entfaltet.

### Beispiel 14 (Herstellung eines latenten Katalysators 3):

5,20 g 5-*tert.*-Butyl-(5-aza-2,8-dioxa-1-stanno)-cyclooctan wurden in 200 ml Benzol gelöst. Zu der Lösung wurden 25 ml einer Lösung von Chlor in Tetrachlormethan (6,3 g / 100 ml) getropft. Aus der Lösung fiel ein Feststoff aus. Nach Entfernen des Lösungsmittels im Vakuum wurde 5-*tert*.-Butyl-(5-aza-2,8-dioxa-1-stanno-1,1-dichlor)-cyclooctan (Verbindung 3, Cl₂Sn(OCH₂CH₂)₂N-tBu) als farbloser Feststoff in quantitativer Ausbeute erhalten.

¹H-NMR (300.13 MHz, C₆D₆): δ = 1.13 (s, 9H, (C**H**₃)₃-C-N), 2.06 (dd, 2H, N-C**H**₂), 2.92 (s, 2H, N-C**H**₂), 4.09 (t, 2H, C**H**₂-O), 4.40 ppm (s, 2H, C**H**₂-O)

¹³C{¹H}-NMR (75.47 MHz, C₆D₆): δ = 27.1 (s, (**C**H₃)₃-C-N), 53.6 (s, N-**C**H₂), 57.1 (s, N-**C**H₂), 62.2 ppm (s, 2x **C**H₂-O).

### Beispiel 15 (Herstellung eines latenten Katalysators 4):

Die Verbindung 4 (Cl₂Sn(OCH₂CH₂)₂N-Me) wurde aus 5-Methyl-(5-aza-2,8-dioxa-1-stanno)-cyclooctan analog der Synthesevorschrift für Katalysator 3 (Beispiel 14) hergestellt.

### Beispiel 16 (PUR-Herstellung mit dem Katalysator (iPrO)₂Sn(OCH₂CH₂)₂NMe, hergestellt durch Umsetzung von (iPrO)₄Sn mit N-Methyldiethanolamin):

280 g Desmodur^{®} MS 192 (MDI-Prepolymer der Fa. Bayer MaterialScience AG, 19,2% NCO-Gehalt) wurden mit 470 g Baytec^{®} VP.PU 20GE12 (Polyol der Fa. Bayer MaterialScience AG, OH-Zahl: 64 mg KOH/g), 30 g 1,4-Butandiol und 1,40 g (0,179 Gew.-%) Katalysator bei 50°C in einer 1,5 1 Weißblechdose (Durchmesser: 120 mm, Höhe: 135 mm) gemischt. Die Mischung wurde in einen auf 80°C temperierten und mit Trennmittel (Indrosil 2000) versehenen hohlen Stahlzylinder (Durchmesser: 40 mm, Höhe: 80 mm) gegossen. Der Probenkörper wurde entnommen.

### Beispiel 17 (PUR-Herstellung mit dem Katalysator 3):

280 g Desmodur^{®} MS 192 (MDI-Prepolymer der Fa. Bayer MaterialScience AG, 19,2% NCO-Gehalt) wurden mit 470 g Baytec^{®} VP.PU 20GE12 (Polyol der Fa. Bayer MaterialScience AG, OH-Zahl: 64 mg KOH/g), 30 g 1,4-Butandiol und 0,75 g (0,096 Gew.-%) des Katalysators 3 bei 50°C in einer 1,5 1 Weißblechdose (Durchmesser: 120 mm, Höhe: 135 mm) gemischt. Die Mischung wurde in einen auf 80°C temperierten und mit Trennmittel (Indrosil 2000) versehenen hohlen Stahlzylinder (Durchmesser: 40 mm, Höhe: 80 mm) gegossen. Der Probenkörper wurde entnommen.

### Beispiel 18 (PUR-Herstellung mit dem Katalysator 4):

280 g Desmodur^{®} MS 192 (MDI-Prepolymer der Fa. Bayer MaterialScience AG, 19,2% NCO-Gehalt) wurden mit 470 g Baytec^{®} VP.PU 20GE12 (Polyol der Fa. Bayer MaterialScience AG, OH-Zahl: 64 mg KOH/g), 30 g 1,4-Butandiol und 1,0 g (0,128 Gew.-%) des Katalysators 4 bei 50°C in einer 1,5 1 Weißblechdose (Durchmesser: 120 mm, Höhe: 135 mm) gemischt. Die Mischung wurde in einen auf 80°C temperierten und mit Trennmittel (Indrosil 2000) versehenen hohlen Stahlzylinder (Durchmesser: 40 mm, Höhe: 80 mm) gegossen. Der Probenkörper wurde entnommen.

### Vergleichsbeispiel 19 (mit Thorcat 535 (80% Phenyl-Hg-neodecanoat, 20% Neodecansäure; Fa. Thor Especialidades S.A.) als Katalysator):

280 g Desmodur^{®} MS 192 (MDI-Prepolymer der Fa. Bayer MaterialScience AG, 19,2%-NCO) wurden mit 470 g Baytec^{®} VP.PU 20GE12 (Polyol der Fa. Bayer MaterialScience AG, OH-Zahl: 64 mg KOH/g), 30 g 1,4-Butandiol und 0,3 g (0,038 Gew.-%) Thorcat 535 bei 50°C in einer 1,5 1 Weißblechdose (Durchmesser: 120 mm, Höhe: 135 mm) gemischt. Die Mischung wurde in einem auf 80°C temperierten und mit Trennmittel (Indrosil 2000) versehenen hohlen Stahlzylinder (Durchmesser: 40 mm, Höhe: 80 mm) gegossen. Der Probenkörper wurde entnommen.

### Vergleichsbeispiel 20 (mit 1,4-Diazabieyclo[2.2.2]octan (DABCO) als Katalysator):

280 g Desmodur MS 192 (MDI-Prepolymer der Fa. Bayer MaterialScience AG, 19,2%-NCO) wurden mit 470 g Baytec^{®} VP.PU 20GE12 (Polyol der Fa. Bayer MaterialScience AG, OH-Zahl: 64 mg KOH/g), 30 g 1,4-Butandiol und 0,024 g (0,003 Gew.-%) DABCO bei 50°C in einer 1,5 1 Weißblechdose (Durchmesser: 120 mm, Höhe: 135 mm) gemischt. Die Mischung wurde in einen auf 80°C temperierten und mit Trennmittel (Indrosil 2000) versehenen hohlen Stahlzylinder (Durchmesser: 40 mm, Höhe: 80 mm) gegossen. Der Probenkörper wurde entnommen.

### Vergleichsbeispiel 21 (mit Sn(OCH₂CH₂)₂NMe als Katalysator):

280 g Desmodur MS 192 (MDI-Prepolymer der Fa. Bayer MaterialScience AG, 19,2 % NCO-Gehalt) wurden mit 470 g Baytec^{®} VP.PU 20GE12 (Polyol der Fa. Bayer MaterialScience AG, OH-Zahl: 64 mg KOH/g), 30 g 1,4-Butandiol und 0,015 g (0,0019 Gew.-%) Sn(OCH₂CH₂)₂NMe bei 50°C in einer 1,5 1 Weißblechdose (Durchmesser: 120 mm, Höhe: 135 mm) gemischt. Die Mischung wurde in einen auf 80°C temperierten und mit Trennmittel (Indrosil 2000) versehenen hohlen Stahlzylinder (Durchmesser: 40 mm, Höhe: 80 mm) gegossen. Der Probenkörper wurde entnommen.

### Vergleichsbeispiel 22 (mit DBTL (Dibutylzinndilaurat) als Katalysator):

280 g Desmodur MS 192 (MDI-Prepolymer der Fa. Bayer MaterialScience AG, 19,2 %-NCO) wurden mit 470 g Baytec^{®} VP.PU 20GE12 (Polyol der Fa. Bayer MaterialScience AG, OH-Zahl: 64 mg KOH/g), 30 g 1,4-Butandiol und 0,03 g (0,0038 Gew.-%) DBTL bei 50°C in einer 1,5 1 Weißblechdose (Durchmesser: 120 mm, Höhe: 135 mm) gemischt. Die Mischung wurde in einem auf 80°C temperierten und mit Trennmittel (Indrosil 2000) versehenen hohlen Stahlzylinder (Durchmesser: 40 mm, Höhe: 80 mm) gegossen. Der Probenkörper wurde entnommen.

### Vergleichsbeispiel 23 (mit DABCO DC-2 (Fa. Air Products Chemicals Europe B.V.) als Katalysator):

280 g Desmodur MS 192 (MDI-Prepolymer der Fa. Bayer MaterialScience AG, 19,2 %-NCO) wurden mit 470 g Baytec^{®} VP.PU 20GE12 (Polyol der Fa. Bayer MaterialScience AG, OH-Zahl: 64 mg KOH/g), 30 g 1,4-Butandiol und 0,015 g (0,0019 Gew.-%) DABCO DC-2 bei 50°C in einer 1,5 1 Weißblechdose (Durchmesser: 120 mm, Höhe: 135 mm) gemischt. Die Mischung wurde in einen auf 80°C tempenerten und mit Trennmittel (Indrosil 2000) versehenen hohlen Stahlzylinder (Durchmesser: 40 mm, Höhe: 80 mm) gegossen. Der Probenkörper wurde entnommen.

**Tabelle 3:**

| | **Katalysator [Gew.-%]** | **Gießzeit [s]** | **Entformung [min]** | **Härte Shore A** |
|---|---|---|---|---|
| Beispiel 16 | 0,179 | 240 | 10 | 71 |
| Beispiel 17 | 0,096 | 240 | 19 | 72 |
| Bespiel 18 | 0,128 | 310 | 17 | 72 |
| Vergleich 19 | 0,038 | 230 | 18 | 73 |
| Vergleich 20 | 0,003 | 260 | 90 | 72 |
| Vergleich 21 | 0,0019 | 230 | 75 | 72 |
| Vergleich 22 | 0,0038 | 240 | 100 | 73 |
| Vergleich 23 | 0,0019 | 250 | 100 | 72 |

Die Härte wurde nach 72 h bei Raumtemperatur gemäß DIN 53505 gemessen.

Aus den Daten ist zu entnehmen, dass bei etwa gleichen Gießzeiten in den erfindungsgemäßen Beispielen Entformungszeiten erhalten werden, die im Bereich des besten kommerziellen Katalysators (Quecksilberkatalysator) oder darunter liegen. In Beispiel 18 wird bei im Vergleich zum Quecksilberkatalysator (Vergleich 19) deutlich längerer Gießzeit die praktisch gleiche Entformungszeit erreicht.

In Vergleich 19 wurde ein gebräuchlicher und üblicher Quecksilberkatalysator, in Vergleich 20 ein typischer Katalysator auf Basis eines tertiären Amins, in Vergleich 21 ein Zinn(II)-Katalysator, in Vergleich 22 ein typischer Zinn(IV)-Katalysator und in Vergleich 23 ein Zinn(IV)-Katalysator mit DABCO-Liganden eingesetzt.

## Patentansprüche

1. Verfahren zur Herstellung von Polyisocyanat-Polyadditionsprodukten mit guten mechanischen Eigenschaften, wobei
Polyisocyanate (a) mit NCO-reaktiven Verbindungen (b) in Gegenwart von latenten Katalysatoren (c) und gegebenenfalls zusätzlichen von (c) verschiedenen Katalysatoren und/oder Aktivatoren unter Zusatz von gegebenenfalls Treibmitteln, gegebenenfalls Füllstoffen und/oder Fasermaterialien und gegebenenfalls Hilfs- und/oder Zusatzmitteln umgesetzt werden, **dadurch gekennzeichnet, dass** als latente Katalysatoren vierwertige einkernige Zinnverbindungen der Formel I mit mindestens einem über wenigstens ein Sauer- . stoff- oder Schwefelatom gebundenen wenigstens einen Stickstoff enthaltenden Liganden
Sn(IV)(L¹)ₙ₁(L²)ₙ₂(L³)ₙ₃(L⁴)ₙ₄ ( I )
mit n1, n2, n3, n4 0 oder 1 und L¹, L², L³, L⁴ ein-, zwei-, drei- oder vierbindige Liganden
oder darauf basierende vierwertige mehrkernige Zinnverbindungen eingesetzt werden, wobei mindestens ein Ligand je Sn-Atom folgende Bedeutung hat:
-X-Y
mit X = O, S, OC(O), OC(S), O(O)S(O)O, O(O)S(O)
Y = -R1-N(R2)(R3) oder -R1-C(R4)=NR2
R1, R2, R3, R4 unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R2, R3, R4 unabhängig voneinander Wasserstoff, R1-X sind oder R2 und R3 oder R2 und R1 oder R3 und R1 oder R4 und R1 oder R4 und R2 einen Ring bilden
und wobei die übrigen Liganden unabhängig voneinander -X-Y mit der vorgenannten Bedeutung sind oder folgende Bedeutung haben:
gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxid, Amidreste, Sauerstoff, Schwefel, R2 oder XR2.

2. Zweikernige vierwertige Zinnverbindungen der Formel II mit mindestens einem über wenigstens ein Sauerstoff oder Schwefelatom gebundenen wenigstens einen Stickstoff enthaltenden Liganden je Sn-Atom
[(L¹)ₙ₁(L²)ₙ₂(L³)ₙ₃Sn(IV)]₂O (II)
mit n1, n2 0 oder 1 und L¹, L², L³ ein-, zwei- oder dreibindige Liganden,
wobei mindestens ein Ligand je Sn-Atom folgende Bedeutung hat:
-X-Y
mit X = O, S, OC(O), OC(S), O(O)S(O)O, O(O)S(O)
Y = -R1-N(R2)(R3) oder -R1-C(R4)=NR2
R1, R2, R3, R4 unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R2, R3, R4 unabhängig voneinander Wasserstoff, R1-X sind oder R2 und R3 oder R2 und R1 oder R3 und R1 oder R4 und R1 oder R4 und R2 einen Ring bilden
und wobei die übrigen Liganden -X-Y mit der vorgenannten Bedeutung sind oder folgende Bedeutung haben:
gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxid, Amidreste, Sauerstoff, Schwefel, R2 oder XR2.

3. Verfahren zur Herstellung der zweikernigen vierwertigen Zinnverbindungen der Formel II gemäß Anspruch 2 mit mindestens einem über wenigstens ein Sauerstoff- oder Schwefelatom gebundenen wenigstens einen Stickstoff enthaltenden Liganden je Sn-Atom, **dadurch gekennzeichnet, dass** sie aus entsprechenden ein- oder mehrkernigen Sn(IV)-Verbindungen über einen Ligandenaustausch hergestellt werden.

4. Zwei- oder mehrkernige vierwertige Zinnverbindungen der Formel III mit mindestens einem über wenigstens ein Sauerstoff- oder Schwefelatom gebundenen wenigstens einen Stickstoff enthaltenden Liganden je Sn-Atom
[(L¹)ₙ₁(L²)ₙ₂Sn(IV)O]ₙ (III)
mit n1, n2 0 oder 1, n größer oder gleich 2 und L¹, L² ein- oder zweibindige Liganden,
wobei mindestens ein Ligand je Sn-Atom folgende Bedeutung hat:
-X-Y
mit X = O, S, OC(O), OC(S), O(O)S(O)O, O(O)S(O)
Y = -R1-N(R2)(R3) oder -R1-C(R4)=NR2
R1, R2, R3, R4 unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R2, R3, R4 unabhängig voneinander Wasserstoff, R1-X sind oder R2 und R3 oder R2 und R1 oder R3 und R1 oder R4 und R1 oder R4 und R2 einen Ring bilden
und wobei der übrige Ligand -X-Y mit der vorgenannten Bedeutung ist oder folgende Bedeutung hat:
gesättigter oder ungesättigter, cyclischer oder acyclischer, verzweigter oder unverzweigter, substituierter oder unsubstituierter, gegebenenfalls durch Heteroatome unterbrochener Kohlenwasserstoffrest, Halogenid, Hydroxid, Amidrest, Sauerstoff, Schwefel, R2 oder XR2.

5. Verfahren zur Herstellung der zwei- oder mehrkernigen vierwertigen Zinnverbindungen der Formel III gemäß Anspruch 4 mit mindestens einem über wenigstens ein Sauerstoff-oder Schwefelatom gebundenen wenigstens einen Stickstoff enthaltenden Liganden je Sn-Atom, **dadurch gekennzeichnet, dass** sie aus entsprechenden ein- oder mehrkernigen Zinn(II)-Verbindungen durch Oxidation mit gleichzeitiger Oligomerisierung oder aus entsprechenden ein- oder mehrkernigen Sn(IV)-Verbindungen über einen Ligandenaustausch hergestellt werden.

6. Latente Katalysatoren bestehend aus vierwertigen einkemigen Zinnverbindungen der Formel I mit mindestens einem über wenigstens ein Sauerstoff- oder Schwefelatom gebundenen wenigstens einen Stickstoff enthaltenden Liganden oder aus zwei- oder mehrkernigen vierwertigen Zinnverbindungen der Formeln II, III oder IV mit jeweils mindestens einem über wenigstens ein Sauerstoff- oder Schwefelatom gebundenen wenigstens einen Stickstoff enthaltenden Liganden je Sn-Atom
Sn(IV)(L¹)ₙ₁(L¹)ₙ₂(L³)ₙ₃(L⁴)ₙ₄ (I)
mit n1, n2, n3, n4 0 oder 1 und L¹, L², L³, L⁴ ein-, zwei-, drei- oder vierbindige Liganden
[(L¹)ₙ₁(L²)ₙ₂(L³)ₙ₃Sn(IV)]₂O (II)
mit n1, n2 0 oder 1 und L¹, L², L³ ein-, zwei- oder dreibindige Liganden
[(L¹)ₙ₁(L²)ₙ₂Sn(IV)O]ₙ (III)
[(L¹)ₙ₁(L²)ₙ₂Sn(IV)]S]ₙ (IV)
mit n1, n2 0 oder 1, n größer oder gleich 2 und L¹, L² ein- oder zweibindige Liganden,
wobei mindestens ein Ligand je Sn-Atom folgende Bedeutung hat:
-X-Y
mit X = O, S, OC(O), OC(S), O(O)S(O)O, O(O)S(O)
Y = -R1-N(R2)(R3)oder-R1-C(R4)=NR2
R1, R2, R3, R4 unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R2, R3, R4 unabhängig voneinander Wasserstoff, R1-X sind oder R2 und R3 oder R2 und R1 oder R3 und R1 oder R4 und R1 oder R4 und R2 einen Ring bilden
und wobei die übrigen Liganden unabhängig voneinander -X-Y mit der vorgenannten Bedeutung sind oder folgende Bedeutung haben:
gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxid, Amidreste, Sauerstoff, Schwefel, R2 oder XR2.

7. Verwendung der latenten Katalysatoren gemäß Anspruch 6 zur Herstellung von Polyisocyanat-Polyadditionsprodukten.

## Claims

1. Process for preparing polyisocyanate polyaddition products with good mechanical properties, by reacting
polyisocyanates (a) with NCO-reactive compounds (b) in the presence of latent catalysts (c) and optionally additional catalysts other than (c) and/or activators, with addition of optionally blowing agents, optionally fillers and/or fibre materials and optionally assistants and/or additives, **characterized in that** the latent catalysts used are tetravalent mononuclear tin compounds of the formula I with at least one ligand containing at least one nitrogen and bonded via at least one oxygen or sulphur atom
Sn(IV)(L¹)ₙ₁(L²)ₙ₂(L³)ₙ₃(L⁴)ₙ₄ (I)
where n1, n2, n3, n4 are each 0 or 1 and L¹, L², L³, L⁴ are each mono-, di-, tri- or tetradentate ligands
or tetravalent polynuclear tin compounds based thereon, where at least one ligand per tin atom is defined as follows:
-X-Y
where X = O, S, OC(O), OC(S), O(O)S(O)O, O(O)S(O)
Y = -R1-N(R2)(R₃) or -R1-C(R4)=NR2
R1, R2, R3, R4 are each independently saturated or unsaturated, cyclic or acyclic, branched or unbranched, substituted or unsubstituted hydrocarbyl radicals optionally interrupted by heteroatoms, or R2, R3, R4 are each independently hydrogen, R1-X, or R2 and R3 or R2 and R1 or R3 and R1 or R4 and R1 or R4 and R2 form a ring,
and where the other ligands are each independently -X-Y as defined above or are defined as follows:
saturated or unsaturated, cyclic or acyclic, branched or unbranched, substituted or unsubstituted hydrocarbyl radicals optionally interrupted by heteroatoms, or halides, hydroxide, amide radicals, oxygen, sulphur, R2 or XR2.

2. Dinuclear tetravalent tin compounds of the formula II with at least one ligand per tin atom containing at least one nitrogen and bonded via at least one oxygen or sulphur atom,
[(L¹)ₙ₁(^{L2})ₙ₂(L³)ₙ₃Sn(IV)]₂O (II)
where n1, n2 are each 0 or 1 and L¹, L², L³ are each mono-, bi- or tridentate ligands,
where at least one ligand per tin atom is defined as follows:
-X-Y
where X = O, S, OC(O), OC(S), O(O)S(O)O, O(O)S(O)
Y = -R1-N(R2)(R3) or -R1-C(R4)=NR2
R1, R2, R3, R4 are each independently saturated or unsaturated, cyclic or acyclic, branched or unbranched, substituted or unsubstituted hydrocarbyl radicals optionally interrupted by heteroatoms, or R2, R3, R4 are each independently hydrogen, R1-X, or R2 and R3 or R2 and R1 or R3 and R1 or R4 and R1 or R4 and R2 form a ring,
and where the other ligands are -X-Y as defined above or are defined as follows:
saturated or unsaturated, cyclic or acyclic, branched or unbranched, substituted or unsubstituted hydrocarbyl radicals optionally interrupted by heteroatoms, or halides, hydroxide, amide radicals, oxygen, sulphur, R2 or XR2.

3. Process for preparing the dinuclear tetradentate tin compounds of the formula II according to claim 2 having at least one ligand per tin atom containing at least one nitrogen and bonded via at least one oxygen or sulphur atom, **characterized in that** they are prepared from corresponding mono- or polynuclear Sn(IV) compounds via a ligand exchange.

4. Di- or polynuclear tetravalent tin compounds of the formula III with at least one ligand per tin atom containing at least one nitrogen and bonded via at least one oxygen or sulphur atom
[(L¹)ₙ₁(L²)ₙ₂Sn(IV)O]ₙ (III)
where n1, n2 are each 0 or 1, n is greater than or equal to 2 and L¹, L² are each mono- or bidentate ligands,
where at least one ligand per tin atom is defined as follows:
-X-Y
where X = O, S, OC(O), OC(S), O(O)S(O)O, O(O)S(O)
Y = -R1-N(R2)(R3) or -R1-C(R4)=NR2
R1, R2, R3, R4 are each independently saturated or unsaturated, cyclic or acyclic, branched or unbranched, substituted or unsubstituted hydrocarbyl radicals optionally interrupted by heteroatoms, or R2, R3, R4 are each independently hydrogen, R1-X, or R2 and R3 or R2 and R1 or R3 and R1 or R4 and R1 or R4 and R2 form a ring,
and where the other ligand is -X-Y as defined above or is defined as follows:
saturated or unsaturated, cyclic or acyclic, branched or unbranched, substituted or unsubstituted hydrocarbyl radical optionally interrupted by heteroatoms, or halide, hydroxide, amide radical, oxygen, sulphur, R2 or XR2.

5. Process for preparing the di- or polynuclear tetravalent tin compounds of the formula III according to Claim 4 with at least one ligand per tin atom containing at least one nitrogen and bonded via at least one oxygen or sulphur atom, **characterized in that** they are prepared from corresponding mono- or polynuclear tin(II) compounds by oxidation with simultaneous oligomerization or from corresponding mono- or polynuclear Sn(IV) compounds via a ligand exchange.

6. Latent catalysts consisting of tetravalent mononuclear tin compounds of the formula I with at least one ligand containing at least one nitrogen and bonded via at least one oxygen or sulphur atom, or of di- or polynuclear tetravalent tin compounds of the formula II, III or IV with in each case at least one ligand per tin atom containing at least one nitrogen and bonded via at least one oxygen or sulphur atom
Sn(IV)(L¹)ₙ₁(L²)ₙ₂(L³)ₙ₃(L⁴)ₙ₄ (I)
where n1, n2, n3, n4 are each 0 or 1 and L¹, L², L³, L⁴ are each mono-, bi-, tri- or tetradentate ligands
[(L¹)ₙ₁(L²)ₙ₂(L³)ₙ₃Sn(IV)]₂O (II)
where n1, n2 are each 0 or 1 and L¹, L², L³ are each mono-, bi- or tridentate ligands
[(L¹)ₙ₁(L²)ₙ₂Sn(IV)O]ₙ (III)
[(L¹)ₙ₁(L²)ₙ₂Sn(IV)S]ₙ (IV)
where n1, n2 are each 0 or 1, n is greater than or equal to 2 and L¹, L² are each mono- or bidentate ligands,
where at least one ligand per tin atom is defined as follows:
-X-Y
where X = O, S, OC(O), OC(S), O(O)S(O)O, O(O)S(O)
Y = -R1-N(R2)(R3) or -R1-C(R4)=NR2
R1, R2, R3, R4 are each independently saturated or unsaturated, cyclic or acyclic, branched or unbranched, substituted or unsubstituted hydrocarbyl radicals optionally interrupted by heteroatoms, or R2, R3, R4 are each independently hydrogen, R1-X, or R2 and R3 or R2 and R1 or R3 and R1 or R4 and R1 or R4 and R2 form a ring,
and where the other ligands are each independently -X-Y as defined above or are defined as follows:
saturated or unsaturated, cyclic or acyclic, branched or unbranched, substituted or unsubstituted hydrocarbyl radicals optionally interrupted by heteroatoms, or halides, hydroxide, amide radicals, oxygen, sulphur, R2 or XR2.

7. Use of the latent catalysts according to Claim 6 for preparation of polyisocyanate polyaddition products.

## Revendications

1. Procédé pour la préparation de produits de polyaddition de polyisocyanates à bonnes caractéristiques mécaniques, dans lequel
on fait réagir des polyisocyanates (a) avec des composés (b) réactifs avec NCO, en présence de catalyseurs latents (c) et éventuellement de catalyseurs supplémentaires différents de (c) et/ou d'activateurs, avec addition éventuellement d'agents d'expansion, éventuellement de charges et/ou de matières fibreuses et éventuellement d'adjuvants et/ou d'additifs, **caractérisé en ce qu'**on utilise comme catalyseurs latents des composés mononucléaires d'étain tétravalent de formule I, comportant au moins un ligand contenant au moins un atome d'azote, lié par au moins un atome d'oxygène ou de soufre
Sn(IV)[(L¹)ₙ₁(L²)ₙ₂(L³)ₙ₃(L⁴)ₙ₄ (I)
où n1, n2, n3, n4 valent 0 ou 1 et L¹, L², L³, L⁴ représentent des ligands à une, deux, trois ou quatre liaisons
ou des composés binucléaires d'étain tétravalent à base de ceux-ci,
au moins un ligand par atome de Sn ayant la signification suivante :
-X-Y-
où X = O, S, OC(O), OC (S), O(O)S(O)O, O(O)S(O)
Y = -R1-N(R2)(R3) ou -R1-C(R4)=NR2
R1, R2, R3, R4 représentent, indépendamment les uns des autres, des radicaux hydrocarbonés éventuellement interrompus par des hétéroatomes, saturés ou insaturés, cycliques ou acycliques, ramifiés ou non ramifiés, substitués ou non substitués, ou R2, R3, R4 représentent, chacun indépendamment, un atome d'hydrogène, R1-X ou bien R2 et R3 ou R2 et R1 ou R3 et R1 ou R4 et R1 ou R4 et R2 forment un cycle
et les ligands restants étant, indépendamment l'un de l'autre, -X-Y avec la signification indiquée précédemment ou ayant la signification suivante :
des radicaux hydrocarbonés éventuellement interrompus par des hétéroatomes, saturés ou insaturés, cycliques ou acycliques, ramifiés ou non ramifiés, substitués ou non substitués, des halogénures, le groupe hydroxy, des radicaux amido, un atome d'oxygène ou de soufre, R2 ou XR2.

2. Composés binucléaires d'étain tétravalent de formule II, comportant par atome de Sn au moins un ligand contenant au moins un atome d'azote, lié par au moins un atome d'oxygène ou de soufre
(L¹)ₙ₁(L²)ₙ₂(L³)ₙ₃Sn(IV)]₂O (II)
où n1, n2 valent 0 ou 1 et L¹, L², L³ représentent des ligands à une, deux ou trois liaisons,
au moins un ligand par atome de Sn ayant la signification suivante :
-X-Y-
où X = O, S, OC(O), OC(S), O(O)S(O)O, O(O)S(O)
Y = -R1-N(R2)(R3) ou -R1-C(R4)=NR2
R1, R2, R3, R4 représentent, indépendamment les uns des autres, des radicaux hydrocarbonés éventuellement interrompus par des hétéroatomes, saturés ou insaturés, cycliques ou acycliques, ramifiés ou non ramifiés, substitués ou non substitués, ou R2, R3, R4 représentent, chacun indépendamment, un atome d'hydrogène, R1-X ou bien R2 et R3 ou R2 et R1 ou R3 et R1 ou R4 et R1 ou R4 et R2 forment un cycle
et les ligands restants étant -X-Y avec la signification indiquée précédemment ou ayant la signification suivante :
des radicaux hydrocarbonés éventuellement interrompus par des hétéroatomes, saturés ou insaturés, cycliques ou acycliques, ramifiés ou non ramifiés, substitués ou non substitués, des halogénures, le groupe hydroxy, des radicaux amido, un atome d'oxygène ou de soufre, R2 ou XR2.

3. Procédé pour la préparation des composés binucléaires d'étain tétravalent de formule II selon la revendication 2, comportant par atome de Sn au moins un ligand contenant au moins un atome d'azote, lié par au moins un atome d'oxygène ou de soufre, **caractérisé en ce qu'**on les prépare par un échange de ligands à partir de composés mono- ou polynucléaires de Sn(IV) correspondants.

4. Composés bi- ou polynucléaires d'étain tétravalent de formule III, comportant par atome de Sn au moins un ligand contenant au moins un atome d'azote, lié par au moins un atome d'oxygène ou de soufre,
[(L¹)ₙ₁(L²)ₙ₂Sn(IV)O]ₙ (III)
où n1, n2 valent 0 ou 1, n est supérieur ou égal à 2 et L¹, L² représentent des ligands à une ou deux liaisons,
au moins un ligand par atome de Sn ayant la signification suivante :
-X-Y-
où X = O, S, OC(O), OC(S), O(O)S(O)O, O(O)S(O)
Y = -R1-N(R2)(R3) ou -R1-C(R4)=NR2
R1, R2, R3, R4 représentent, indépendamment les uns des autres, des radicaux hydrocarbonés éventuellement interrompus par des hétéroatomes, saturés ou insaturés, cycliques ou acycliques, ramifiés ou non ramifiés, substitués ou non substitués, ou R2, R3, R4 représentent, chacun indépendamment, un atome d'hydrogène, R1-X ou bien R2 et R3 ou R2 et R1 ou R3 et R1 ou R4 et R1 ou R4 et R2 forment un cycle
et le ligand restant étant -X-Y avec la signification indiquée précédemment ou ayant la signification suivante :
un radical hydrocarboné éventuellement interrompu par des hétéroatomes, saturé ou insaturé, cyclique ou acyclique, ramifié ou non ramifié, substitué ou non substitué, un halogénure, le groupe hydroxy, un radical amido, un atome d'oxygène ou de soufre, R2 ou XR2.

5. Procédé pour la préparation des composés bi- ou polynucléaires d'étain tétravalent de formule III selon la revendication 4, comportant par atome de Sn au moins un ligand contenant au moins un atome d'azote, lié par au moins un atome d'oxygène ou de soufre, **caractérisé en ce qu'**on les prépare à partir de composés d'étain(II) mono- ou polynucléaires correspondants par oxydation avec oligomérisation simultanée ou à partir de composés de Sn(IV)mono- ou polynucléaires correspondants par un échange de ligands.

6. Catalyseurs latents constitués de composés mononucléaires d'étain tétravalent de formule I, comportant au moins un ligand contenant au moins un atome d'azote, lié par au moins un atome d'oxygène ou de soufre ou de composés bi- ou polynucléaires nucléaires d'étain tétravalent de formules II, III ou IV comportant chacun par atome de Sn au moins un ligand contenant au moins un atome d'azote, lié par au moins un atome d'oxygène ou de soufre
Sn(IV)[(L¹)ₙ₁(L²)ₙ₂(L³)ₙ₃(L⁴)ₙ₄ (I)
où n1, n2, n3, n4 valent 0 ou 1 et L¹, L², L³, L⁴ représentent des ligands à une, deux, trois ou quatre liaisons
(L¹)ₙ₁(L²)ₙ₂(L³)ₙ₃Sn(IV)]₂O (II)
où n1, n2 valent 0 ou 1 et L¹, L², L³ représentent des ligands à une, deux ou trois liaisons,
(L¹)ₙ₁(L²)ₙ₂Sn(IV)O]ₙ (III)
(L¹)ₙ₁(L²)ₙ₂Sn(IV)S]ₙ (IV)
où n1, n2 valent 0 ou 1, n est supérieur ou égal à 2 et L¹, L² représentent des ligands à une ou deux liaisons, au moins un ligand par atome de Sn ayant la signification suivante :
-X-Y-
où X = 0, S, OC(O), OC(S), O(O)S(O)O, O(O)S(O)
Y = -R1-N(R2)(R3) ou -R1-C(R4)=NR2
R1, R2, R3, R4 représentent, indépendamment les uns des autres, des radicaux hydrocarbonés éventuellement interrompus par des hétéroatomes, saturés ou insaturés, cycliques ou acycliques, ramifiés ou non ramifiés, substitués ou non substitués, ou R2, R3, R4 représentent, chacun indépendamment, un atome d'hydrogène, R1-X ou bien R2 et R3 ou R2 et R1 ou R3 et R1 ou R4 et R1 ou R4 et R2 forment un cycle
et les ligands restants étant, indépendamment l'un de l'autre, -X-Y avec la signification indiquée précédemment ou ayant la signification suivante :
des radicaux hydrocarbonés saturés ou insaturés éventuellement interrompus par des hétéroatomes, cycliques ou acycliques, ramifiés ou non ramifiés, substitués ou non substitués, des halogénures, le groupe hydroxy, des radicaux amido, un atome d'oxygène ou de soufre, R2 ou XR2.

7. Utilisation des catalyseurs latents selon la revendication 6, pour la préparation de produits de polyaddition de polyisocyanates.
